# DEMANDE DE BREVET EUROPEEN

(11) **EP 0 989 157 A1**
(43) Date de publication de la demande: **29.03.2000**
(21) Numéro de dépôt: 99402328.1
(22) Date de dépôt: 23.09.1999
(51) Int. Cl.: C08J 9/10, B29C 44/28

(54) **Procédé de préparation d'une mousse de polyoléfine réticulée**

(30) Priorité: 24.09.1998 FR 9811913
(71) Demandeur: NORTON PERFORMANCE PLASTICS S.A., 4650 Chaineux (BE)
(72) Inventeur: Ladang, Michel, 4651 Battice (BE); Petit, Dominique, 4671 Blegny (BE)
(74) Mandataire: Muller, René

(57) **Abrégé**

Le procédé de l'invention se caractérise par l'expansion unidirectionnelle d'une composition contenant une proportion substantielle de polyoléfine au moins partiellement réticulée et/ou réticulable, pour former un produit en mousse, notamment relativement souple. L'utilisation d'un polyéthylène ou copolymère d'éthylène obtenu par catalyse au métallocène est préférée.

## Description

La présente invention a trait à la préparation des mousses réticulées telles que constituées de polyoléfines.

Les mousses de polyoléfine réticulée sont des mousses flexibles de densités relativement faibles, en général inférieures à 200 kg/m³, et dont la phase solide consiste pour l'essentiel en polyoléfines réticulées. Les polyoléfines les plus employées dans ce domaine sont les polyéthylène (PE), polypropylène (PP) et copolymère éthylène/acétate de vinyle (EVA).

La réticulation permet d'améliorer les mousses sur de nombreux points, quant à leurs propriétés mécaniques et thermiques ; des structures cellulaires plus fines sont obtenues.

La réticulation peut consister en une irradiation à haute énergie telle que par faisceau d'électrons, en une réaction chimique avec des agents du type peroxydes ou avec l'humidité par incorporation d'un groupe silane latéral sur le squelette de la polyoléfine. Dans les deux premiers procédés cités, on crée sur les chaînes carbonées des molécules de polyoléfines des sites réactifs à radicaux libres en vue de la formation ultérieure des liaisons intermoléculaires de réticulation.

Dans le troisième procédé (réticulation à l'humidité), la réticulation est réalisée par formation de liaisons intermoléculaires :
polyoléfine-Si-O-Si-polyoléfine.

La réticulation par irradiation à haute énergie est remarquable dans son aptitude à produire une réticulation parfaitement uniforme en surface ; elle permet de fabriquer des feuilles en mousse de haute qualité, aussi fines que de 0,2 mm d'épaisseur.

La situation est inverse pour la réticulation chimique par peroxydes ou autres et la réticulation au silane, recommandées pour des feuilles d'épaisseur plus importantes, par exemple comprises entre 3 et 18 mm, car dans ces procédés, la réticulation a lieu dans toute l'épaisseur du produit, de manière homogène et régulière. En revanche, ces procédés sont moins bien appropriés pour des feuilles très minces car à l'échelle microscopique, la dispersion des agents réticulants est moins homogène que ce qu'un faisceau d'électrons permet d'obtenir.

D'autre part, l'expansion des mousses de polyoléfine réticulée se produit dans les trois dimensions. Il importe de régler soigneusement le degré de réticulation de la résine au début de l'expansion et pendant toute sa durée ; la teneur des compositions de départ en agent d'expansion et de réticulation (en cas de réticulation chimique) est, bien entendu, adaptée à cet effet ainsi que les durées et températures des traitements thermiques. Cependant, quelles que soient les conditions opératoires ainsi sélectionnées, le produit se trouve, au cours de la réticulation et de l'expansion combinées, dans l'état de transition solide-liquide : il est collant, difficile à manipuler, voire coulant, auquel cas il est susceptible d'épouser la surface du four sur laquelle il repose en y adhérant, l'expansion libre étant alors empêchée ce qui, finalement, nuit à l'aspect de surface du produit obtenu (présence d'irrégularités en stries, rides...).

Différentes techniques ont été proposées pour la réalisation, notamment en continu, de la réticulation-expansion tridimensionnelle du produit intermédiaire collant plus ou moins fluide.

Une première technique consiste à faire flotter le produit sur un bain chauffé constitué de 50 % de KNO3 et de 50 % de NaNO₂ (procédé Toray). Le bain chauffé à la température d'expansion a la consistance d'une huile chaude et l'expansion se développe librement dans les trois dimensions. La mousse finale se conforme à la surface plane du bain ; sa fabrication est achevée par des opérations de lavage, séchage et enroulement le cas échéant.

Selon une seconde proposition (procédé Toray et Sekisui) est mis en oeuvre un four vertical, précédé d'un four horizontal de préchauffage/conditionnement (à température inférieure à la température d'expansion). Le produit, par exemple en feuille continue est tiré vers le haut au moyen de roulettes de traction ; le four vertical produit un contre-courant d'air chaud et un rayonnement infrarouge. Les moyens de maintien de la résine dans le four vertical sont conçus en fonction de l'expansion tridimensionnelle : ils comportent notamment des roulettes d'entraînement à vitesses croissantes d'amont en aval.

Une troisième approche est cependant plus fréquente que les deux précédentes. Il s'agit de celle des procédés Hitachi et Furukawa, mettant en oeuvre un four horizontal à trois zones de chauffage graduel. Dans les trois zones ont respectivement lieu une pré-réticulation/conditionnement à température inférieure à la température de décomposition de l'agent d'expansion, une première phase d'expansion à température modérée, puis une seconde phase d'achèvement de l'expansion à température plus élevée. Pour éviter que le produit intermédiaire plus ou moins collant n'adhère à son support de manière à perturber ensuite le développement de l'expansion, ce support est éventuellement constitué, par endroits, de coussins d'air.

Les trois procédés sont assez souples d'emploi, polyvalents et, en particulier, compatibles avec une réticulation par irradiation, une réticulation chimique ou une réticulation par condensation de silane. Ils n'en demeurent pas moins complexes et coûteux en appareillage.

D'autre part, les mousses de polyoléfine réticulée connues à l'heure actuelle sont relativement dures.

Il existe donc un besoin de mettre à disposition un procédé simple et économique de préparation d'une mousse telle que susmentionnée, qui surmonte le problème de l'écoulement et de l'adhésion de la résine à son support, au cours de la préparation et de l'entraînement du produit en expansion, la mousse ainsi obtenue présentant subsidiairement des propriétés nouvelles.

Ce but est atteint par l'invention qui a pour objet un procédé de préparation d'une mousse de polyoléfine réticulée, consistant pour une partie ou dans sa totalité en une expansion essentiellement unidirectionnelle.

En bloquant ainsi l'expansion dans deux des trois dimensions et, en particulier dans la direction d'entraînement de la matière, dans une production en continu, on facilite considérablement cet entraînement. Celui-ci n'a plus à être effectué à vitesse croissante d'amont en aval, comme expliqué précédemment, et le positionnement des organes d'entraînement peut ne varier que dans la direction d'entraînement et n'a plus à être ajusté dans d'autres directions au fur et à mesure de l'expansion. La mise en oeuvre d'un bain nécessitant de longues opérations de lavage, séchage est superflue.

Le procédé de l'invention est particulièrement bien adapté à l'expansion d'un produit ayant sensiblement la forme d'une feuille, uniquement selon son épaisseur.

Selon une autre caractéristique avantageuse dans la perspective d'une production industrielle, le procédé est réalisé en continu. Dans le cas préféré de la feuille susmentionnée, celle-ci consiste alors en une bande continue. Cette bande provient d'un enroulement ou consiste en un produit d'extrusion. Un four horizontal est alors utilisé de préférence, notamment du type à trois zones (procédés Hitachi et Furukawa mentionnés précédemment), en général dans des versions simplifiées sans coussins d'air. En effet, comme expliqué en détail ci-dessous, l'invention résout, pour une large part et d'une autre manière, le problème de l'adhésion du produit à expanser à la surface du four.

Cependant, l'emploi d'un four vertical (procédé Toray et Sekisui) ou même d'un bain chauffé comme évoqués ci-dessus, bien que non préféré dans le cadre de l'invention, n'en est nullement exclu, étant entendu que des matériaux appropriés compatibles avec les caractéristiques du procédé sont choisis dans la constitution du produit en mousse à préparer.

Comme déjà mentionné, l'expansion unidirectionnelle est réalisée en bloquant l'expansion dans les deux autres directions. Deux modes principaux de blocage font partie de l'invention.

Selon un premier mode, on fait adhérer, préalablement à l'expansion, un support à une ou deux faces du produit intermédiaire à expanser, perpendiculaires à la direction de l'expansion. L'expansion selon des directions appartenant au plan de ces faces est bloquée par l'effet de l'adhésion au support non susceptible de s'étendre.

Dans le cas de l'expansion d'une feuille, les supports ont généralement aussi une forme de feuille. L'adhésion du support à une face du produit peut être obtenue de différentes manières.

Généralement, le produit à expanser est soumis à un chauffage graduel ; la réticulation débute le plus souvent avant l'expansion, bien que l'invention n'exclue nullement qu'elle ait intégralement lieu après, toutes les situations intermédiaires étant également dans la portée du brevet. Le fait de faire démarrer la réticulation avant l'expansion vise à augmenter la viscosité du produit intermédiaire et, plus précisément, à éviter que sa viscosité soit trop faible au moment où l'agent d'expansion se décompose ou le gaz d'expansion est libéré, auquel cas la mousse ne se forme évidemment pas.

Le plus souvent, le produit se trouve, à un moment donné avant l'expansion, dans un état collant, voire coulant, notamment sous l'effet d'une élévation de température. L'adhésion du support à une face du produit intermédiaire résulte alors simplement de l'application de l'un contre l'autre.

Cette adhésion peut également être aisément obtenue par coextrusion, par exemple dans la production d'une mousse de polyéthylène sur support de poly(téréphtalate d'éthylène).

D'autre part, une autre variante consiste à augmenter la tension superficielle du support, par exemple en piégeant des charges sur sa surface par décharge couronne, puis à mettre en contact cette surface du support avec une face du produit intermédiaire. Le support est susceptible d'adhérer à ce produit par effet électrostatique.

Le second mode principal de blocage de l'expansion dans deux directions consiste à réticuler superficiellement au préalable une ou deux faces du produit intermédiaire à expanser, perpendiculaires à la direction de l'expansion. Les trois types de réticulation précités par irradiation à haute énergie (faisceau d'électrons...), réaction chimique avec des composés tels que peroxydes ou avec l'humidité par incorporation d'un silane sur la polyoléfine, peuvent ici être employés. La réticulation superficielle comporte donc une ou plusieurs des étapes suivantes :
- irradiation à haute énergie,
- pulvérisation de réactifs (eau ou autre),
- application d'un rayonnement lumineux ou décharge couronne pour former des radicaux libres,
- élévation de température soigneusement dosée en intensité et durée...

Le choix de la présence d'un ou deux supports, ou de l'absence de support et, dans ce cas, de la réticulation superficielle d'une ou deux faces du produit intermédiaire, dépend de nombreux éléments.

La variante à deux supports est bien adaptée à un produit final sous forme de plaques planes. Par contre, elle ne permet pratiquement pas d'enrouler ce produit. Dans cette variante, il peut donc être indiqué de séparer l'un des supports si l'on souhaite présenter le produit final sous forme de rouleaux.

La mise en oeuvre d'un support aboutit à des mousses plus denses que celle de deux supports ; en effet, du gaz d'expansion est susceptible de s'échapper par la surface libre du produit, c'est-à-dire la surface sans support.

D'autre part, l'aspect de surface du produit obtenu peut être choisi de manière contrôlée en fonction de l'application envisagée, cette surface pouvant être constituée par un support ou par la surface de la mousse elle-même, éventuellement après séparation d'un support.

La variante du second mode principal de blocage de l'expansion dans deux directions, consistant à réticuler superficiellement une ou deux faces du produit intermédiaire avant l'expansion, permet d'aboutir de manière contrôlée à une mousse dont les degrés de réticulation en surface et au coeur sont identiques ou différents.

Selon une caractéristique préférée du procédé de l'invention, la mousse est obtenue à partir d'une composition comprenant au moins 20 % en poids d'un polyéthylène ou d'un copolymère d'éthylène essentiellement linéaire de densité comprise entre 0,80 et 0,96 g/cm³.

De manière particulièrement préférée, le polyéthylène ou le copolymère d'éthylène utilisé est obtenu par catalyse au métallocène et a une densité au plus égale à 0,92 g/cm³. En ce qui concerne la composition de ces polymères préférés et, en particulier leurs caractéristiques physiques et la nature des comonomères, la demande de brevet EP 0 702 032 A2, qui décrit également leur traitement par réticulation et expansion, est incorporée ici à titre de référence.

L'exemple qui suit sert à illustrer l'invention.

### EXEMPLE

On prépare des mousses de polyoléfine réticulée à partir de mélanges comportant les polymères suivants :
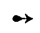 polyéthylène basse densité commercialisé par la société POLIMERI EUROPA sous la marque enregistrée RIBLENE :
   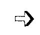 grade FL 20 :
   ◆ densité d = 0,921 g/cm³,
   ◆ indice de fluidité à chaud (MFI) [Melt Flow Index] = 2,2 g/10 min ;
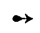 élastomères copolymères d'éthylène, obtenus par catalyse au métallocène et commercialisés par la société DU PONT DOW ELASTOMERS sous la marque enregistrée ENGAGE :
   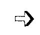 grade 8400 :
      ◆ d = 0,870 g/cm³,
      ◆ MFI = 30 g/10 min ;
   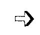 grade 8200 :
      ◆ d = 0,870 g/cm³,
      ◆ MFI = 5 g/10 min ;
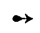 copolymère éthylène/butène obtenu par catalyse au métallocène et commercialisé par la société EXXON CHEMICAL sous la marque enregistrée EXACT :
   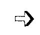 grade 5008 :
   ◆ d = 0,865 g/cm³,
   ◆ MFI = 10 g/10 min ;
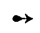 copolymère éthylène/acétate de vinyle commercialisé par la société ATOCHEM sous la marque enregistrée EVATANE :
   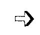 grade 28-25 :
   ◆ d = 0,950 g/cm³,
   ◆ MFI = 22-29 g/10 min
   (teneur pondérale en acétate de vinyle comprise entre 27 et 29 %) ;
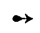 copolymère isobutylène/isoprène (caoutchouc butyle), commercialisé par la société EXXON CHEMICAL sous la désignation 268 :
   ◆ d = 0,920 g/cm³,
   ◆ viscosité Mooney ML 1 + 8 à 125°C = 51 ± 5
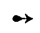 copolymère isobutylène/isoprène, commercialisé par la société EXXON CHEMICAL sous la désignation 065 :
   ◆ d = 0,920 g/cm³,
   ◆ viscosité Mooney ML 1 + 8 à 100°C = 45 ± 4.

Les densités sont déterminées conformément à la norme ASTM D 1505 ; le MFI à la norme ASTM D 1238 et la viscosité Mooney à la norme ASTM D 1646.

Une composition contenant un ou deux des polymères précités est homogénéisée pendant 3 min. On y ajoute, en 40 secondes, de l'agent gonflant en proportion habituelle (environ 30 g pour 100 g de polymère). Cet agent gonflant, commercialisé par la société TRAMACO sous la désignation TRACEL XL 3139, est un azodicarbonamide (agent gonflant) mélangé à un peroxyde organique (agent de réticulation), tous deux étant dispersés dans une polyoléfine. Sa température de décomposition est d'environ 145°C.

On mélange pendant 10 min dans un mélangeur de Brabender à une température de 125°C et une vitesse de rotation de 60 t/min.

Le produit est prélevé, placé entre deux feuilles de tissu de verre totalement imprégné de poly(tétrafluoroéthylène). Un film composite de 2 mm d'épaisseur est ainsi réalisé au moyen d'une presse hydraulique chauffée à 110°C.

L'expansion est effectuée par chauffage à 210°C pendant 4 min 30 s à 5 min. Finalement, les feuilles de tissu de verre sont séparées de la mousse obtenue.

Différents essais sont réalisés sur cette mousse :
- mesure de la densité (kg/m³),
- compression C (N/cm²) selon la norme ASTM D 1667 avec taux de compression de 30 % et une vitesse de compression de 10 mm/min,
- déflexion R (N/cm²) (maintien de la compression à 30 % pendant 1 min),
- absorption d'eau (% en poids),
- déformation permanente à la compression (compression set) (%) : ce pourcentage exprime une diminution d'épaisseur, mesurée après compression d'un échantillon à 25 % de son épaisseur pendant 22 heures à température ambiante, puis repos pendant 24 heures à la même température.

Les résultats sont reproduits dans le tableau I suivant :

**TABLEAU I**

| Composition | Densité (kg/m³) | C/R (N/cm²) | Absorption d'eau (%) | Compression set (%) |
|---|---|---|---|---|
| En 8400/RIBLENE | | | | |
| 100/0 | 120 | 2,53/1,95 | 22,20 | 6,66 |
| 70/30 | 103 | 2,44/1,46 | 48,11 | 11,62 |
| 50/50 | 102 | 6,38/4,31 | 30,60 | 8,50 |
| En 8200/RIBLENE | | | | |
| 100/0 | 126 | 4,25/3,33 | 19,50 | 7,66 |
| 70/30 | 104 | 5,36/3,86 | | 6,66 |
| Ex 5008/RIBLENE | | | | |
| 100/0 | 130 | 1,92/1,52 | 35,60 | 6,70 |
| 70/30 | 120 | 6,35/3,70 | 11,80 | 7,60 |
| Avec : En = Engage ; Ex = Exact ; C = Compression ; R = Déflexion | | | | |

Les mousses de polyoléfine réticulée obtenues sont remarquables par leur souplesse, comme indiqué par la valeur de C comprise entre 1,92 et 6,38 N/cm² pour des densités ≥ 102 kg/m³.

Les mousses sont à structure fine et à cellules fermées pour une bonne partie, ce qu'indiquent des valeurs relativement faibles de quantités d'eau absorbée.

Leur taux de gel, défini comme le pourcentage pondéral de la fraction insoluble - en extrait sec - d'un échantillon de 50 mg immergé pendant 24 heures à 120°C dans 25 ml de xylène séché sur tamis moléculaire, est compris entre 40 et 60 % dans tous les cas.

Elles sont susceptibles d'être appliquées dans des domaines variés, y compris les plus exigeants comme le marché de l'étanchéité.

La structure des mousses est bonne, y compris celle de leur peau : la surface est lisse et présente un bel aspect exempt d'irrégularités.

Une seconde série d'essais a été réalisée en remplaçant le polyéthylène basse densité (LDPE) RIBLENE par des produits élastomériques de masses moléculaires moins élevées, en l'occurrence les copolymères isobutylène/isoprène et éthylène/acétate de vinyle mentionnés précédemment.

Les résultats sont reportés dans le tableau II ci-dessous.

**TABLEAU II**

| Composition | Densité (kg/m³) | C/R (N/cm²) | Épaisseur (mm) |
|---|---|---|---|
| En 8400/N27 | | | |
| 70/30 | 142 | 1,81/1,21 | 10,95 |
| 50/50 | 161 | 2,16/1,35 | 10,30 |
| En 8400/065 | | | |
| 70/30 | 135 | 1,80/1,31 | 11,00 |
| En 8400/EVA 2825 | | | |
| 70/30 | 137 | 2,70/2,15 | |

Bien que les durées d'expansion aient été allongées entre 5 min 30 s et 6 min, celle-ci a eu lieu à un degré moindre qu'avec du LDPE au lieu d'un élastomère, comme l'indiquent les densités relativement élevées de 135 à 161 kg/ m³.

Les mousses obtenues présentent une souplesse remarquable (compressions faibles).

La structure cellulaire de la mousse réalisée à partir du butyle 065 est moins fine que les autres.

Par rapport à la première série d'essais (tableau I), les mousses de la seconde série (tableau II) ont une peau plus fine, plus fragile et adhèrant plus au support.

Ainsi, est mis à disposition un procédé simplifié, principalement eu égard à l'appareillage à mettre en oeuvre, de préparation d'une mousse en continu, dans lequel l'expansion du produit ne nécessite nullement une adaptation compliquée des moyens d'entraînement. Le problème de l'écoulement et de l'adhésion de la résine au fond du four est supprimé soit par interposition d'une ou deux feuilles supports, comme celles de tissu de verre imprégné de PTFE dans l'exemple ci-dessus, soit par réticulation superficielle.

De cette manière sont en particulier susceptibles d'être obtenues des mousses de polyoléfine réticulée remarquablement souples.

## Revendications

1. Procédé de préparation d'une mousse de polyoléfine réticulée, **caractérisé en ce qu**'il comprend une expansion essentiellement unidirectionnelle.

2. Procédé selon la revendication 1, **caractérisé en ce qu**'il comprend l'expansion d'un produit ayant sensiblement la forme d'une feuille, uniquement selon son épaisseur.

3. Procédé selon la revendication 2, **caractérisé en ce qu**'il est réalisé en continu.

4. Procédé selon l'une des revendications 1 à 3, **caractérisé en ce que** l'expansion unidirectionnelle est réalisée en faisant adhérer au préalable un support à une ou deux faces du produit intermédiaire à expanser, perpendiculaires à la direction de l'expansion.

5. Procédé selon la revendication 4, **caractérisé en ce que** l'adhésion du support est favorisée par une opération préalable de décharge couronne.

6. Procédé selon l'une des revendications 1 à 3, **caractérisé en ce que** l'expansion unidirectionnelle est réalisée en réticulant superficiellement au préalable une ou deux faces du produit intermédiaire à expanser, perpendiculaires à la direction de l'expansion.

7. Procédé selon l'une des revendications 1 à 6, **caractérisé en ce que** la mousse est obtenue à partir d'une composition comprenant au moins 20 % en poids d'un polyéthylène ou d'un copolymère d'éthylène essentiellement linéaire de densité comprise entre 0,80 et 0,96 g/cm³.

8. Procédé selon la revendication 7, **caractérisé en ce que** le polyéthylène ou le copolymère d'éthylène est obtenu par catalyse au métallocène et a une densité au plus égale à 0,92 g/cm³.

9. Mousse de polyoléfine réticulée souple obtenue par la mise en oeuvre du procédé selon l'une des revendications 1 à 8.
